(19) Europäisches Patentamt
European Patent Office
Office européen des brevets

(11) **EP 4 800 271 A1**

(12) **EUROPEAN PATENT APPLICATION**
published in accordance with Art. 153(4) EPC

(43) Date of publication:
**02.09.2026 Bulletin 2026/36**

(21) Application number: **24882393.2**

(22) Date of filing: **22.10.2024**

(51) International Patent Classification (IPC):
***F16K 11/048*** *(2006.01)* ***F04C 18/02*** *(2006.01)*

(52) Cooperative Patent Classification (CPC):
**F04C 18/02; F16K 11/048**

(86) International application number:
**PCT/JP2024/037616**

(87) International publication number:
**WO 2025/089282 (01.05.2025 Gazette 2025/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.10.2023 JP 2023185028**

(71) Applicant: **Eagle Industry Co., Ltd.**
**Minato-ku**
**Tokyo 105-8587 (JP)**

(72) Inventor: **KURIHARA Daichi**
**Tokyo 105-8587 (JP)**

(74) Representative: **WSL Patentanwälte Partnerschaft mbB**
**Kaiser-Friedrich-Ring 98**
**65185 Wiesbaden (DE)**

(54) **VALVE**

(57) There is provided a valve capable of smoothly changing the pressure of a back-pressure fluid. A valve V1 includes a housing 60 having a high-pressure space S2 into which a high-pressure fluid Pd flows, back-pressure spaces S3 and S3' into which a back-pressure fluid Pb flows, and a low-pressure space S1 into which a low-pressure fluid Ps flows; and a valve body 61 disposed so as to be movable relative to the housing 60. The housing 60 has a first passage 73 providing a communication between the high-pressure space S2 and the back-pressure space S3, and a second passage 78 providing a communication between the back-pressure space S3' and the low-pressure space S1. The valve body 61 includes a first valve body portion 72 that controls an opening degree of the first passage 73, and a second valve body portion 77 that controls an opening degree of the second passage 78. The first valve body portion 72 and the second valve body portion 77 move in coordination with each other such that movement directions of the first valve body portion 72 and the second valve body portion 77 are opposite to each other in an opening direction and a closing direction.

Fig. 2

EP 4 800 271 A1

Processed by Luminess, 75001 PARIS (FR)

## Description

{TECHNICAL FIELD}

The present invention relates to a valve, for example, a valve that controls pressure.

{BACKGROUND ART}

A scroll compressor is one type of compressor used in various industrial fields, and this type of compressor is used, for example, in a wide range of applications such as refrigeration cycles owing not only to a high compression efficiency but also to low noise.

The scroll compressor includes a scroll compression mechanism composed of a fixed scroll including a spiral wrap and a movable scroll including a spiral wrap; a rotary shaft that eccentrically rotates the movable scroll; and the like, and has a structure in which the movable scroll slides relative to the fixed scroll while eccentrically rotating with respect to the fixed scroll, thereby pressurizing a fluid that is a refrigerant supplied from a suction chamber on an outer-diameter side of both scrolls, and discharging the high-pressure refrigerant from a discharge port formed at the center of the fixed scroll.

In this type of scroll compressor, when the pressure in a discharge chamber from which the refrigerant compressed by the scroll compression mechanism is discharged increases, a force acts in a direction in which the movable scroll is separated from the fixed scroll.

A scroll compressor of Patent Citation 1 is provided with an air supply passage that allows communication between a discharge chamber and a back-pressure chamber formed on a back surface side of a movable scroll. A part of the air supply passage is a slit that functions as a fixed throttle. Since a portion of a refrigerant compressed in the discharge chamber is depressurized and adjusted by the slit, is supplied to the back-pressure chamber, and presses the movable scroll toward a fixed scroll, the movable scroll is prevented from separating from the fixed scroll.

In addition, the scroll compressor is provided with an air bleed passage that allows communication between the back-pressure chamber and a suction chamber. A back-pressure control valve is provided in the air bleed passage. The back-pressure control valve includes a front housing, a casing, and a valve body. The front housing and the casing form a first valve chamber communicating with the discharge chamber, a second valve chamber communicating with the back-pressure chamber, and a third valve chamber communicating with the suction chamber. The valve body is reciprocably housed in the front housing and the casing, and together with a valve seat provided between the third valve chamber and the second valve chamber, forms a BS valve that can vary the flow rate in the air bleed passage between the back-pressure chamber and the suction chamber. In addition, the valve body moves in an opening direction or a closing direction according to the discharge pressure, the back pressure, and the suction pressure, thereby allowing the opening degree of the BS valve to be adjusted.

{CITATION LIST}

{Patent Literature}

Patent Citation 1: JP 2010-150967 A (Pages 5 to 8, FIG. 1)

{SUMMARY OF INVENTION}

{Technical Problem}

In such a scroll compressor of Patent Citation 1, when the back pressure tends to become insufficient, the valve body of the back-pressure control valve moves in the closing direction, thereby reducing the opening degree of the BS valve or closing the BS valve. At this time, in the scroll compressor, since a refrigerant continues to be supplied to the back-pressure chamber through the air supply passage, the pressure in the back-pressure chamber can be increased.

In addition, when the back pressure tends to become excessive, the valve body of the back-pressure control valve moves in the opening direction, thereby increasing the opening degree of the BS valve, so that the pressure in the back-pressure chamber can be reduced. However, even when the back pressure tends to become excessive and the opening degree of the BS valve is large, it takes time for the pressure in the back-pressure chamber to reach an appropriate pressure since the refrigerant continues to be supplied to the back-pressure chamber through the air supply passage, which is a problem.

The present invention has been made in view of such a problem, and an object of the present invention is to provide a valve capable of smoothly changing the pressure of a back-pressure fluid.

{Solution to Problem}

In order to solve the foregoing problem, a valve according to the present invention is a valve including a housing having a high-pressure space into which a high-pressure fluid flows, a back-pressure space into which a back-pressure fluid flows, and a low-pressure space into which a low-pressure fluid flows; and a valve body configured to be movable relative to the housing, wherein the housing has a first passage configured to provide a communication between the high-pressure space and the back-pressure space, and a second passage configured to provide a communication between the back-pressure space and the low-pressure space, the valve body includes a first valve body portion configured to control an opening degree of the first passage, and a second valve body configured to control an opening degree of the second passage, and the first valve body portion and the second valve body portion configured to move in coordination with each other such that movement directions of the first valve body portion and the second valve body portion are opposite to each other in an opening direction and a closing direction. According to the feature of the present invention, since the opening degree of the second passage increases when the opening degree of the first passage decreases, and the opening degree of the first passage increases when the opening degree of the second passage decreases, the pressure of the back-pressure fluid can be smoothly changed. In addition, since the back pressure can be adjusted solely by the valve, the configuration of an attached device can be simplified.

It may be preferable that the back-pressure space includes a first back-pressure space configured for communicating with the first passage, and a second back-pressure space configured for communicating with the second passage and partitioned from the first back-pressure space. According to this preferable configuration, the fluid can be prevented from directly flowing into a space with low pressure from a space with relatively high pressure.

It may be preferable that the valve body further includes a connecting portion that connects the first valve body portion and the second valve body portion. According to this preferable configuration, the first valve body portion and the second valve body portion can be easily moved in coordination with each other.

It may be preferable that a gap between the housing and the connecting portion is sealed. According to this preferable configuration, the fluid can be prevented from directly flowing into a space with low pressure from a space with relatively high pressure.

It may be preferable that the valve further includes a biasing member configured to bias the valve body in one direction, wherein a pressure Pd of the high-pressure fluid, a pressure Pb of the back-pressure fluid, a pressure Ps of the low-pressure fluid, an effective cross-sectional area A of the first valve body portion, an effective cross-sectional area B of the connecting portion, an effective cross-sectional area C of the second valve body portion, and a biasing force $F_{sp}$ of the biasing member are configured to satisfy the following Equation I.

$$Pb = \frac{A-B}{A-B+C}Pd + \frac{C}{A-B+C}Ps + \frac{Fsp}{A-B+C}$$

--- Equation I

According to this preferable configuration, the valve body can be smoothly moved according to the pressure Pd of the high-pressure fluid, the pressure Pb of the back-pressure fluid, the pressure Ps of the low-pressure fluid, and the biasing force $F_{sp}$ of the biasing member.

It may be preferable that the effective cross-sectional area A and the effective cross-sectional area C are larger than the effective cross-sectional area B. According to this preferable configuration, the influence of the back-pressure fluid and the low-pressure fluid can be made greater than that of the high-pressure fluid.

It may be preferable that the housing has a first valve seat provided in the first passage, and a second valve seat provided in the second passage. According to this preferable configuration, since the first passage or the second passage can be reliably closed by bringing the first valve body portion or the second valve body portion into contact with the first valve seat or the second valve seat, the pressure of the back-pressure fluid can be more smoothly changed.

{BRIEF DESCRIPTION OF DRAWINGS}

FIG. 1 is a schematic configuration view illustrating a scroll compressor to which a valve according to a first embodiment of the present invention is applied.

FIG. 2 is a cross-sectional view of the valve according to the first embodiment of the present invention.

FIG. 3 is a cross-sectional view of a valve according to a second embodiment of the present invention.

{DESCRIPTION OF EMBODIMENTS}

Modes for implementing a valve according to the present invention will be described below based on embodiments.

{First embodiment}

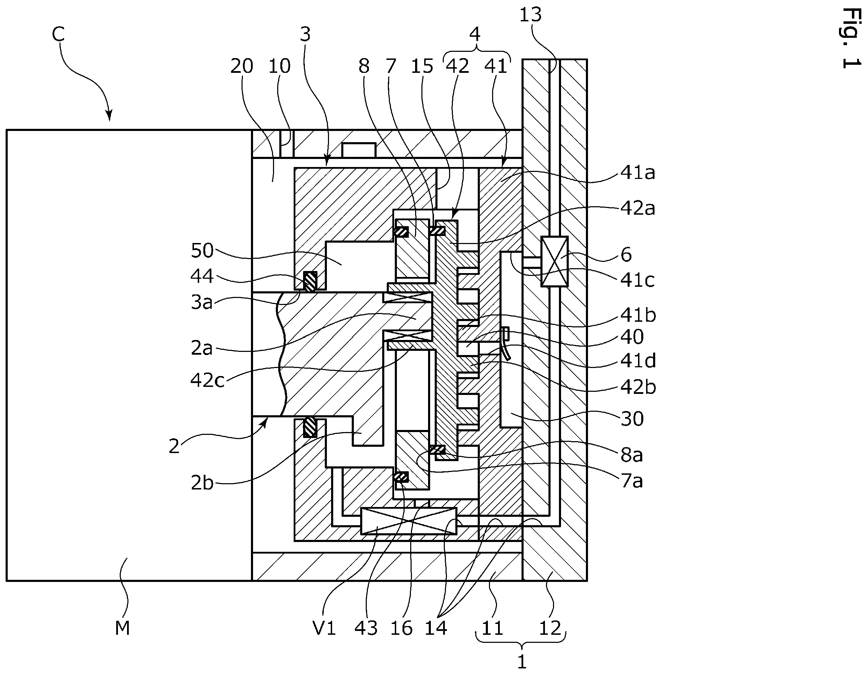

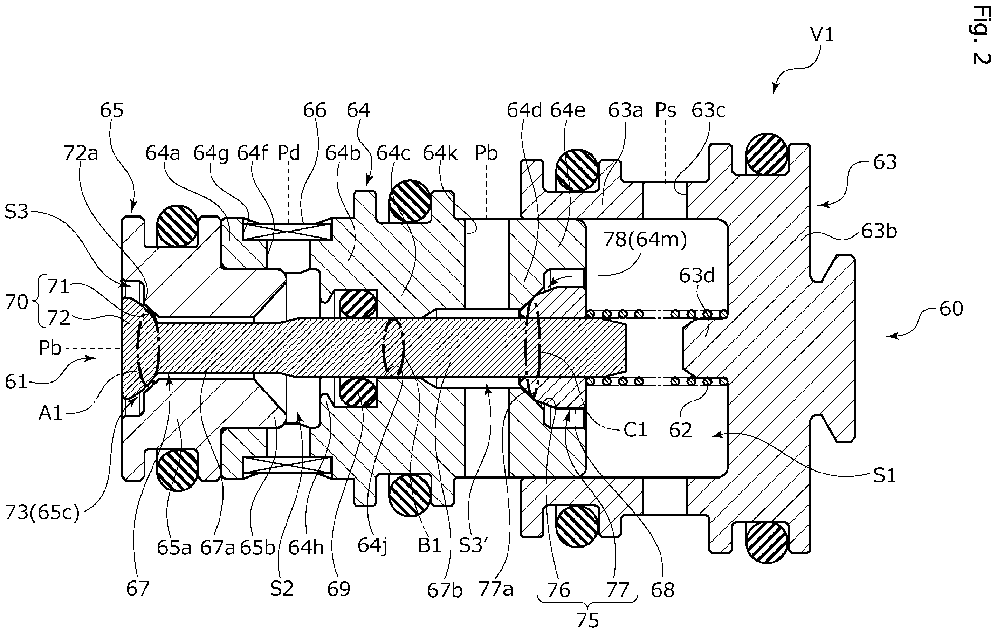

A valve according to the first embodiment will be described with reference to FIGS. 1 and 2. The valve of the present invention is applied to a rotary machine including an eccentric mechanism, for example, a scroll compressor C that suctions, compresses, and discharges a refrigerant as a fluid used in an air conditioning system for an automobile or the like. Incidentally, in the present embodiment, the refrigerant is a gas, and is mixed with lubricating oil in the form of a mist.

First, the scroll compressor C will be described. As illustrated in FIG. 1, the scroll compressor C is mainly composed of a housing 1, a rotary shaft 2, an inner casing 3, a scroll compression mechanism 4, a side seal 7, a thrust plate 8, and a drive motor M.

The housing 1 is composed of a casing 11 having a cylindrical shape, and a cover 12 that closes an opening of the casing 11. An opening of the casing 11 on the side axially opposite to the opening closed by the cover 12 is closed by the drive motor M.

Inside the casing 11, a low-pressure chamber 20 to which a low-pressure refrigerant, that is, a suction fluid Ps as a low-pressure fluid, is supplied from a refrigerant circuit (not illustrated) through a suction port 10, a high-pressure chamber 30 serving as a discharge chamber from which a high-pressure refrigerant compressed by the scroll compression mechanism 4, that is, a discharge fluid Pd as a high-pressure fluid, is discharged, and a back-pressure chamber 50 to which a portion of the refrigerant compressed by the scroll compression mechanism 4 together with the lubricating oil, that is, a control fluid Pb as a back-pressure fluid, is supplied via a back-pressure control valve V1 are formed. Incidentally, the back-pressure chamber 50 is formed inside the inner casing 3 having a cylindrical shape that is accommodated inside the casing 11.

A discharge communication passage 13 that allows communication between the refrigerant circuit (not illustrated) and the high-pressure chamber 30 is formed in the cover 12. In addition, a part of a back-pressure communication passage 14 that allows communication between the high-pressure chamber 30 and the back-pressure chamber 50 is formed in the cover 12 by branching off from the discharge communication passage 13. Incidentally, an oil separator 6 that separates the lubricating oil from the refrigerant is provided in the discharge communication passage 13.

The inner casing 3 is fixed in a state in which an axial end portion of the inner casing 3 abuts against an end plate 41a of a fixed scroll 41 constituting the scroll compression mechanism 4. In addition, a suction communication passage 15 is formed in a side wall of the inner casing 3 so as to penetrate therethrough in a radial direction. That is, the low-pressure chamber 20 is formed from the outside of the inner casing 3 to the inside of the inner casing 3 via the suction communication passage 15. The suction fluid Ps supplied to the inside of the inner casing 3 through the suction communication passage 15 is suctioned into the scroll compression mechanism 4.

The scroll compression mechanism 4 is mainly composed of the fixed scroll 41 fixed to the cover 12 in a sealed manner, and a movable scroll 42 accommodated inside the inner casing 3.

The fixed scroll 41 is made of metal, and includes a wrap 41b having a spiral shape that protrudes from a front surface of the end plate 41a having a disk shape, that is, an end surface of the end plate 41a which faces the movable scroll 42, toward the movable scroll 42. In addition, in the fixed scroll 41, a recess 41c recessed in a direction opposite to the cover 12 is formed on a back surface of the end plate 41a, that is, on an inner-diameter side of an end surface of the end plate 41a which abuts against the cover 12, and the high-pressure chamber 30 is defined by the recess 41c and the cover 12.

The movable scroll 42 is made of metal, and includes a wrap 42b having a spiral shape that protrudes from a front surface of an end plate 42a having a disk shape, that is, an end surface of the end plate 42a which faces the fixed scroll 41, toward the fixed scroll 41. In addition, a boss 42c protruding from the center of a back surface of the end plate 42a is formed on the movable scroll 42. An eccentric portion 2a formed in the rotary shaft 2 is inserted and fitted into the boss 42c so as to be rotatable relative to the boss 42c. Incidentally, in the present embodiment, the eccentric portion 2a of the rotary shaft 2 and a counterweight portion 2b protruding from the rotary shaft 2 in a radially outward direction constitute an eccentric mechanism that eccentrically rotates the rotary shaft 2.

When the rotary shaft 2 is rotationally driven by the drive motor M, the eccentric portion 2a rotates eccentrically, and the movable scroll 42 slides relative to the fixed scroll 41 while performing eccentric rotation in a state in which the movable scroll 42 maintains the posture. At this time, the movable scroll 42 rotates eccentrically with respect to the fixed scroll 41, and as the movable scroll 42 rotates, the contact positions between the wraps 41b and 42b move sequentially in a rotation direction, and a compression chamber 40 formed between the wraps 41b and 42b gradually decreases while moving toward the center. Accordingly, the suction fluid Ps suctioned into the compression chamber 40 from the low-pressure chamber 20 formed on an outer-diameter side of the scroll compression mechanism 4 is compressed, and finally, the high-pressure discharge fluid Pd is discharged into the high-pressure chamber 30 through a discharge hole 41d

provided at the center of the fixed scroll 41.

The side seal 7 is made of resin, has a rectangular cross-section and an annular shape when viewed in an axial direction, and is fixed to the back surface of the end plate 42a of the movable scroll 42. A sliding surface 7a that abuts against a sliding surface 8a formed on the thrust plate 8 is formed on the side seal 7.

The thrust plate 8 is made of metal and has an annular shape, and a seal ring 43 is fixed to the thrust plate 8. The seal ring 43 abuts against an inner peripheral end surface of the inner casing 3. Accordingly, the thrust plate 8 functions as a thrust bearing that receives an axial load of the movable scroll 42 via the side seal 7.

In addition, the side seal 7 and the seal ring 43 partition the low-pressure chamber 20 formed on the outer-diameter side of the movable scroll 42 and the back-pressure chamber 50 formed on a back surface side of the movable scroll 42 inside the inner casing 3. The back-pressure chamber 50 is formed as a sealed space by sealing a gap between a through-hole 3a provided at the center of the inner casing 3 and the rotary shaft 2 inserted through the through-hole 3a using a seal ring 44 fixed to an inner periphery of the through-hole 3a.

In addition, the back-pressure control valve V1 serving as the valve is provided in the back-pressure communication passage 14 that is formed across the cover 12, the fixed scroll 41, and the inner casing 3 and that allows communication between the high-pressure chamber 30 and the back-pressure chamber 50. In other words, the back-pressure control valve V1 is provided in the interior of the housing 1, which is isolated from the outside air.

A portion of the discharge fluid Pd in the high-pressure chamber 30 which is supplied to the back-pressure control valve V1 together with the lubricating oil separated by the oil separator 6 is adjusted in pressure to the control fluid Pb, and is supplied to the back-pressure chamber 50.

In addition, a pressure relief hole 16 that allows communication between the back-pressure control valve V1 and the low-pressure chamber 20 is formed in the inner casing 3.

Next, the back-pressure control valve V1 serving as a valve in the present embodiment will be described with reference to FIG. 2. Hereinafter, the left and right sides of FIG. 2 when viewed from the front side will be described as the left and right sides of the back-pressure control valve V1.

As illustrated in FIG. 2, the back-pressure control valve V1 of the first embodiment is mainly composed of a housing 60, a rod 61 serving as a valve body, and a coil spring 62 serving as a biasing member for pressing the rod 61 in one direction.

The housing 60 partitions a low-pressure space S1 communicating with the low-pressure chamber 20, a high-pressure space S2 communicating with the high-pressure chamber 30, and back-pressure spaces S3 and S3' communicating with the back-pressure chamber 50. Incidentally, the housing 60 may at least partially partition the low-pressure space S1, the high-pressure space S2, and the back-pressure spaces S3 and S3'.

The housing 60 is composed of a first divided body 63, a second divided body 64, and a third divided body 65 arranged in order from the right.

The first divided body 63 includes a peripheral wall 63a and a side wall 63b, and is formed in a tubular shape with a side wall that is open toward the left in the axial direction.

The peripheral wall 63a is formed in a tubular shape extending in the axial direction. The peripheral wall 63a is provided with communication holes 63c penetrating therethrough in the radial direction and communicating with the low-pressure chamber 20 and the low-pressure space S1. In the present embodiment, the communication holes 63c are disposed in two equally spaced positions, and the number or disposition of the communication holes 63c may be changed as appropriate. The same applies to communication holes 64f and 64k to be described later.

The inner diameter of the peripheral wall 63a is substantially constant along the axial direction.

The side wall 63b is formed in a disk shape that closes an axial right end of the peripheral wall 63a.

In addition, a protrusion 63d having a columnar shape that protrudes from the center of a left end surface of the side wall 63b toward the left in the axial direction is formed in the side wall 63b. An axial right end of the coil spring 62 is externally fitted to the protrusion 63d. Accordingly, the axial right end of the coil spring 62 is positioned in the radial direction. In addition, the axial right end of the coil spring 62 abuts against the side wall 63b.

The second divided body 64 includes, in order from the left in the axial direction, a left large inner-diameter peripheral wall 64a, a left medium inner-diameter peripheral wall 64b, a small inner-diameter peripheral wall 64c, a right medium inner-diameter peripheral wall 64d, and a right large inner-diameter peripheral wall 64e, and is formed in a tubular shape extending in the axial direction.

The left large inner-diameter peripheral wall 64a has a cylindrical shape extending in the axial direction. The communication holes 64f are formed in the left large inner-diameter peripheral wall 64a so as to penetrate therethrough in the radial direction and communicate with the high-pressure space S2.

An outer-diameter end of each of the communication holes 64f is formed as a recess 64g having an annular shape that is increased in diameter and that is open toward the outer-diameter side, and communicates with the high-pressure chamber 30. A filter 66 for removing foreign matter such as contaminants contained in the refrigerant is provided in the recess 64g.

The left medium inner-diameter peripheral wall 64b has a tubular shape extending from a right end of the left large

inner-diameter peripheral wall 64a to the right in the axial direction. An inner diameter of the left medium inner-diameter peripheral wall 64b is smaller than an inner diameter of the left large inner-diameter peripheral wall 64a. In addition, the left medium inner-diameter peripheral wall 64b includes an annular eave portion 64h projecting from a left end of the left medium inner-diameter peripheral wall 64b to the inner-diameter side.

The small inner-diameter peripheral wall 64c has a tubular shape extending from a right end of the left medium inner-diameter peripheral wall 64b to the right in the axial direction. A through-hole 64j is formed at the radial center of the small inner-diameter peripheral wall 64c so as to penetrate therethrough in the axial direction. An inner diameter of the small inner-diameter peripheral wall 64c is smaller than the inner diameter of the left medium inner-diameter peripheral wall 64b, in more detail, an inner diameter of the eave portion 64h.

The right medium inner-diameter peripheral wall 64d has a tubular shape extending from a right end of the small inner-diameter peripheral wall 64c to the right in the axial direction. The second back-pressure space S3' and a second valve hole 64m are formed at the radial center of the right medium inner-diameter peripheral wall 64d.

The second back-pressure space S3' is increased in diameter from the through-hole 64j to the right in the axial direction, and further extends toward the right in the axial direction with a substantially constant diameter.

The second valve hole 64m is increased in diameter from the second back-pressure space S3' toward the right in the axial direction. A tapered surface that defines the second valve hole 64m is a second valve seat 76.

A second valve body portion 77 of the rod 61 comes into contact with and separates from the second valve seat 76. That is, the second valve seat 76 and the second valve body portion 77 constitute a BS valve 75 serving as a second valve that controls the opening and closing of a second passage 78 between the second valve seat 76 and a curved surface 77a of the second valve body portion 77 by allowing the second valve seat 76 and the second valve body portion 77 to come into contact with and separate from each other. In addition, the second valve body portion 77 adjusts the opening degree of the second passage 78 in response to the movement of the rod 61, thereby allowing the flow rate passing therethrough to be adjusted. Hereinafter, the adjustment of the opening degree of the second passage 78 by the movement of the rod 61 may be described as the adjustment of the opening degree of the BS valve 75.

In addition, the communication holes 64k are formed in the right medium inner-diameter peripheral wall 64d so as to penetrate therethrough in the radial direction and communicate with the back-pressure chamber 50 and the second back-pressure space S3'.

The right large inner-diameter peripheral wall 64e has a cylindrical shape extending from a right end of the right medium inner-diameter peripheral wall 64d to the right in the axial direction. An inner diameter of the right large inner-diameter peripheral wall 64e is larger than an inner diameter of the right medium inner-diameter peripheral wall 64d, in more detail, a maximum diameter of the second valve seat 76.

An outer diameter of a right end of the second divided body 64 is substantially constant along the axial direction, and is substantially the same as or slightly larger than the inner diameter of the peripheral wall 63a of the first divided body 63.

The right end of the second divided body 64 is press-fitted and fixed to the inner side of the peripheral wall 63a of the first divided body 63. A space surrounded by the peripheral wall 63a and the side wall 63b of the first divided body 63 and the right medium inner-diameter peripheral wall 64d and the right large inner-diameter peripheral wall 64e of the second divided body 64 serves as the low-pressure space S1 into which the suction fluid Ps flows.

The third divided body 65 includes, in order from the left in the axial direction, a large outer-diameter peripheral wall 65a and a small outer-diameter peripheral wall 65b, and is formed in a tubular shape with an external step.

The large outer-diameter peripheral wall 65a has a tubular shape extending in the axial direction.

The small outer-diameter peripheral wall 65b has a cylindrical shape extending from a right end of the large outer-diameter peripheral wall 65a to the right in the axial direction. An outer diameter of the small outer-diameter peripheral wall 65b is smaller than an outer diameter of the large outer-diameter peripheral wall 65a.

The outer diameter of the small outer-diameter peripheral wall 65b is substantially constant along the axial direction, and is substantially the same as or slightly larger than the inner diameter of the left large inner-diameter peripheral wall 64a of the second divided body 64.

The small outer-diameter peripheral wall 65b of the third divided body 65 is press-fitted and fixed to the inner side of the left large inner-diameter peripheral wall 64a of the second divided body 64. In addition, the large outer-diameter peripheral wall 65a of the third divided body 65 abuts against the left large inner-diameter peripheral wall 64a of the second divided body 64, thereby positioning the third divided body 65 in the axial direction. A space surrounded by the left large inner-diameter peripheral wall 64a, the left medium inner-diameter peripheral wall 64b, and the small inner-diameter peripheral wall 64c of the second divided body 64 and the third divided body 65 serves as the high-pressure space S2 into which the discharge fluid Pd flows.

A first valve hole 65c is formed in the radial center of the large outer-diameter peripheral wall 65a and the small outer-diameter peripheral wall 65b, that is, in the radial center of the third divided body 65.

The first valve hole 65c extends from the high-pressure space S2 toward the left in the axial direction with a substantially constant diameter, and is increased in diameter as the first valve hole 65c further extends toward the left in the

axial direction. A tapered surface that defines a portion that is increased in diameter as the first valve hole 65c extends toward the left in the axial direction is a first valve seat 71.

A first valve body portion 72 of the rod 61 comes into contact with and separates from the first valve seat 71. That is, the first valve seat 71 and the first valve body portion 72 constitute a DB valve 70 serving as a first valve that controls the opening and closing of a first passage 73 between the first valve seat 71 and a curved surface 72a of the first valve body portion 72 by allowing the first valve seat 71 and the first valve body portion 72 to come into contact with and separate from each other. In addition, the first valve body portion 72 adjusts the opening degree of the first passage 73 in response to the movement of the rod 61, thereby allowing the flow rate passing therethrough to be adjusted. Hereinafter, the adjustment of the opening degree of the first passage 73 by the movement of the rod 61 may be described as the adjustment of the opening degree of the DB valve 70.

The first back-pressure space S3 is formed at the radial center of the large outer-diameter peripheral wall 65a. The first back-pressure space S3 is recessed from a left end surface of the large outer-diameter peripheral wall 65a to the right in the axial direction, and is open toward the left in the axial direction. The first back-pressure space S3 communicates with the back-pressure chamber 50 and the first valve hole 65c.

The rod 61 is composed of a base 67 and an annular member 68.

The base 67 has a stepped columnar shape, and the annular member 68 to be described later is fixed to a right end of the base 67. A left end of the base 67 constitutes the first valve body portion 72. The right end of the base 67 and the annular member 68 constitute the second valve body portion 77. In addition, a portion of the base 67 between the first valve body portion 72 and the second valve body portion 77 is a shaft portion 67a serving as a connecting portion that connects the first valve body portion 72 and the second valve body portion 77.

The first valve body portion 72 has the curved surface 72a that is formed as a part of a spherical shape and that is reduced in diameter as the curved surface 72a extends from the left end of the first valve body portion 72 toward the right in the axial direction.

The first valve body portion 72 is disposed across the first back-pressure space S3 and the first valve hole 65c. That is, each of the pressure of the discharge fluid Pd and the pressure of the control fluid Pb acts on the first valve body portion 72. An effective cross-sectional area A1 of the first valve body portion 72 is substantially the same as a cross-sectional area of the first valve body portion 72 at the location where the first valve body portion 72 is in line contact with the first valve seat 71 in a circumferential direction with the first valve body portion 72 seated thereon.

The shaft portion 67a is formed in a stepped columnar shape that extends from a right end of the first valve body portion 72 toward the right in the axial direction with a substantially constant diameter, is increased in diameter as the shaft portion 67a extends toward the right in the axial direction, further extends toward the right in the axial direction with a substantially constant diameter, and then is reduced in diameter as the shaft portion 67a extends toward the right in the axial direction.

The shaft portion 67a is inserted into the housing 60 from the first back-pressure space S3 side, and is disposed across the first valve hole 65c, the high-pressure space S2, the through-hole 64j, the second back-pressure space S3', the second valve hole 64m, and the low-pressure space S1. That is, each of the pressure of the discharge fluid Pd, the pressure of the control fluid Pb, and the pressure of the suction fluid Ps acts on the shaft portion 67a. An effective cross-sectional area B1 of the shaft portion 67a is a cross-sectional area at the location where the shaft portion 67a is inserted through the through-hole 64j, that is, a cross-sectional area of a large-diameter body portion 67b that has the largest diameter in the shaft portion 67a. The effective cross-sectional area B1 of the shaft portion 67a is narrower than the effective cross-sectional area A1 of the first valve body portion 72 (A1 > B1).

In addition, each of an outer peripheral surface of the large-diameter body portion 67b and an inner peripheral surface of the small inner-diameter peripheral wall 64c which defines the through-hole 64j is a smooth surface having a constant diameter along the axial direction, and both surfaces are slidable relative to each other. In addition, since a gap between the outer peripheral surface of the large-diameter body portion 67b and the inner peripheral surface of the small inner-diameter peripheral wall 64c is very small, the refrigerant hardly moves between the high-pressure space S2 and the second back-pressure space S3' via the gap.

Further, an O-ring 69 serving as sealing means is externally fitted to the large-diameter body portion 67b. The O-ring 69 is internally fitted to the left medium inner-diameter peripheral wall 64b of the second divided body 64. The O-ring 69 seals a gap between the shaft portion 67a and the left medium inner-diameter peripheral wall 64b while allowing the rod 61 to move in the axial direction. That is, the O-ring 69 seals a gap between the high-pressure space S2 and the second back-pressure space S3'.

As described above, the eave portion 64h is formed at the left end of the left medium inner-diameter peripheral wall 64b. In addition, the small inner-diameter peripheral wall 64c is continuous with the left medium inner-diameter peripheral wall 64b on the right side in the axial direction, that is, on the low-pressure space S1 side. That is, since the O-ring 69 is disposed between the eave portion 64h and the small inner-diameter peripheral wall 64c in the axial direction, the O-ring 69 is prevented from moving outward in the axial direction from the left medium inner-diameter peripheral wall 64b.

An axial right end of the large-diameter body portion 67b of the shaft portion 67a is press-fitted and fixed to the

annular member 68. The annular member 68 is formed in an annular shape. An inner diameter of the annular member 68 is substantially the same as or slightly smaller than an outer diameter of the large-diameter body portion 67b.

A right end of the shaft portion 67a protrudes to the right in the axial direction beyond an axial right end edge of the annular member 68, and an axial left end of the coil spring 62 is externally fitted to the right end. Accordingly, the axial left end of the coil spring 62 is positioned in the radial direction. In addition, the axial left end of the coil spring 62 abuts against the annular member 68.

The annular member 68 has the curved surface 77a that is formed as a part of a spherical shape and that is increased in diameter as the curved surface 77a extends from the left end of the annular member 68 toward the right in the axial direction.

The second valve body portion 77 is disposed across the second back-pressure space S3' and the low-pressure space S1. That is, each of the pressure of the control fluid Pb and the pressure of the suction fluid Ps acts on the second valve body portion 77. An effective cross-sectional area C1 of the second valve body portion 77 is a cross-sectional area of the second valve body portion 77 on the inner-diameter side of the location where the second valve body portion 77 is in line contact with the second valve seat 76 in the circumferential direction with the second valve body portion 77 seated thereon, in other words, substantially the same as the sum of a cross-sectional area of the annular member 68 and a cross-sectional area of the large-diameter body portion 67b.

The effective cross-sectional area C1 of the second valve body portion 77 is wider than the effective cross-sectional area A1 of the first valve body portion 72 and the effective cross-sectional area B1 of the shaft portion 67a (C1 > A1 > B1).

An effective pressure-receiving area of the rod 61 on which the pressure of the control fluid Pb in the first back-pressure space S3 acts is the effective cross-sectional area A1 of the first valve body portion 72.

An effective pressure-receiving area of the rod 61 on which the pressure of the discharge fluid Pd acts is a portion (A1 - B1) of the effective cross-sectional area A1 of the first valve body portion 72, the portion being located on the outer-diameter side of the effective cross-sectional area B1 of the shaft portion 67a.

The effective pressure-receiving area A1 of the rod 61 on which the pressure of the control fluid Pb in the first back-pressure space S3 acts is wider than the effective pressure-receiving area (A1 - B1) of the rod 61 on which the pressure of the discharge fluid Pd acts (A1 > (A1 -B1)).

An effective pressure-receiving area of the rod 61 on which the pressure of the control fluid Pb in the second back-pressure space S3' acts is a portion (C1 - B1) of the effective cross-sectional area C1 of the second valve seat 76, the portion being located on the outer-diameter side of the effective cross-sectional area B1 of the shaft portion 67a.

The effective pressure-receiving area (C1 - B1) of the rod 61 on which the pressure of the control fluid Pb in the second back-pressure space S3' acts is wider than the effective pressure-receiving area (A1 - B1) of the rod 61 on which the pressure of the discharge fluid Pd acts ((C1 - B1) > (A1 -B1)).

An effective pressure-receiving area of the rod 61 on which the pressure of the suction fluid Ps acts is the effective cross-sectional area C1 of the second valve body portion 77.

Next, the opening and closing operation of the back-pressure control valve V1 will be described. Incidentally, in the present embodiment, the pressure of the discharge fluid Pd is denoted as Pd in equations, the pressure of the control fluid Pb is denoted as Pb in equations, and the pressure of the suction fluid Ps is denoted as Ps in equations.

In the housing 60, the suction fluid Ps flows into the low-pressure space S1, the discharge fluid Pd flows into the high-pressure space S2, and the control fluid Pb flows into the back-pressure spaces S3 and S3'.

The rod 61 is pushed toward the left in the axial direction by a force ($F_{Pd}$ = Pd x (A1 - B1)) generated due to the pressure of the discharge fluid Pd acting on the effective pressure-receiving area (A1 - B1), a force ($F_{Ps}$ = Ps x C1) generated due to the pressure of the suction fluid Ps acting on the effective cross-sectional area C1, and a biasing force $F_{sp}$ of the coil spring 62 (that is, with a leftward direction defined as positive, a force $F_1 = F_{Pd} + F_{Ps} + F_{sp}$ acts on the rod 61).

In addition, the rod 61 is pushed to the right in the axial direction by a force ($F_{Pb1}$ = Pb x A1) generated due to the pressure of the control fluid Pb in the first back-pressure space S3 acting on the effective cross-sectional area A1 and a force ($F_{Pb2}$ = Pb x (C1 - B1)) generated due to the pressure of the control fluid Pb in the second back-pressure space S3' acting on the effective pressure-receiving area (C1 - B1) (that is, with a rightward defined as positive, a force $F_2 = F_{Pb1} + F_{Pb2}$ acts on the rod 61).

The balance equations between the force $F_1$ and the force $F_2$ are as follows, and it can be seen that Equation I is satisfied.

$F_1 = F_2$

$$Pd \times (A1 - B1) + Ps \times C1 + F_{sp} = Pb \times A + Pb \times (C1 - B1)$$

$$(A1 - B1 + C1) \times Pb = Pd \times (A1 - B1) + Ps \times C1 + F_{sp}$$

$$Pb = C1 \div (A1 - B1 + C1) \times Ps + (A1 - B1) \div (A1 - B1 + C1) + F_{sp} \div (A1 - B1 + C1)$$

When the force $F_1$ becomes greater than the force $F_2$ from a state in which the force $F_1$ and the force $F_2$ are balanced, the rod 61 moves toward the left in the axial direction (the force $F_1$ > the force $F_2$). Then, when the force $F_1$ and the force $F_2$ are balanced ($F_1 = F_2$) or when the second valve body portion 77 is seated on the second valve seat 76 of the housing 60, the rod 61 comes to a standstill.

When the force $F_1$ becomes smaller than the force $F_2$ from a state in which the force $F_1$ and the force $F_2$ are balanced, the rod 61 moves toward the right in the axial direction (the force $F_1$ < the force $F_2$). Then, when the force $F_1$ and the force $F_2$ are balanced ($F_1 = F_2$) or when the first valve body portion 72 is seated on the first valve seat 71 of the housing 60, the rod 61 comes to a standstill.

In this way, the back-pressure control valve V1 can smoothly move the rod 61 according to the pressure of the discharge fluid Pd, the pressure of the control fluid Pb, the pressure of the suction fluid Ps, and the biasing force of the coil spring 62.

When the first valve body portion 72 is located at a position spaced apart from the first valve seat 71, and the second valve body portion 77 is located at a position spaced apart from the second valve seat 76, the DB valve 70 and the BS valve 75 are in an open state.

In this regard, in more detail, the DB valve 70 and the BS valve 75 are configured such that as the rod 61 moves to the left in the axial direction, the first valve body portion 72 separates from the first valve seat 71, thereby increasing the opening degree of the DB valve 70, and the second valve body portion 77 approaches the second valve seat 76, thereby decreasing the opening degree of the BS valve 75.

In the present embodiment, when the second valve body portion 77 is seated on the second valve seat 76 and the BS valve 75 is in a closed state, the first valve body portion 72 is located at a position farthest apart from the first valve seat 71, and the opening degree of the DB valve 70 is at its maximum.

The DB valve 70 and the BS valve 75 are configured such that as the rod 61 moves to the right in the axial direction, the first valve body portion 72 approaches the first valve seat 71, thereby decreasing the opening degree of the DB valve 70, and the second valve body portion 77 separates from the second valve seat 76, thereby increasing the opening degree of the BS valve 75.

In the present embodiment, when the first valve body portion 72 is seated on the first valve seat 71 and the DB valve 70 is in a closed state, the second valve body portion 77 is located at a position farthest apart from the second valve seat 76, and the opening degree of the BS valve 75 is at its maximum.

The opening degrees of the DB valve 70 and the BS valve 75 change from a maximum opening degree larger than the opening degree of a fixed throttle such as the slit disclosed in Patent Citation 1, to the opening degree of the fixed throttle, to an opening degree smaller than the opening degree of the fixed throttle, and then to a valve closed state.

Incidentally, the range of opening degrees of the DB valve 70 and the BS valve 75 may be adjusted as appropriate; however, it is preferable that the range of opening degrees is at least smaller than the opening degree of the fixed throttle such as the slit disclosed in Patent Citation 1.

As described above, the back-pressure control valve V1 of the present embodiment is configured such that the opening degree of the second passage 78 increases when the opening degree of the first passage 73 decreases, and the opening degree of the first passage 73 increases when the opening degree of the second passage 78 decreases.

For example, when the pressure of the control fluid Pb becomes relatively greater than the pressure of the discharge fluid Pd or the suction fluid Ps from a state in which the force $F_1$ and the force $F_2$ are balanced, the opening degree of the first passage 73 decreases, whereas the opening degree of the second passage 78 increases. By making the opening degree of the first passage 73 smaller than the opening degree of the fixed throttle such as the slit disclosed in Patent Citation 1, the amount of refrigerant flowing into the first back-pressure space S3 can be reduced compared to the fixed throttle, so that the pressure of the control fluid Pb can be smoothly reduced.

Further, by making the opening degree of the second passage 78 larger than the opening degree of the fixed throttle such as the slit disclosed in Patent Citation 1, the pressure of the control fluid Pb can be more smoothly reduced.

In addition, when the pressure of the control fluid Pb becomes relatively smaller than the pressure of the discharge fluid Pd or the suction fluid Ps from a state in which the force $F_1$ and the force $F_2$ are balanced, the opening degree of the first passage 73 increases, whereas the opening degree of the second passage 78 decreases. By making the opening degree of the first passage 73 larger than the opening degree of the fixed throttle such as the slit disclosed in Patent Citation 1, the amount of refrigerant flowing into the first back-pressure space S3 can be increased compared to the fixed throttle, so that the pressure of the control fluid Pb can be smoothly increased.

Further, by making the opening degree of the second passage 78 smaller than the opening degree of the fixed throttle such as the slit disclosed in Patent Citation 1, the pressure of the control fluid Pb can be more smoothly increased.

In this way, the back-pressure control valve V1 can smoothly change the pressure of the control fluid Pb. In addition, since the back pressure can be adjusted solely by the back-pressure control valve V1, the configuration of the

scroll compressor C can be simplified.

In addition, since the rod 61 is configured such that the first valve body portion 72 and the second valve body portion 77 are connected by the shaft portion 67a, the first valve body portion 72 and the second valve body portion 77 can be easily moved in coordination with each other.

In addition, the second back-pressure space S3' is a space partitioned from the first back-pressure space S3. The refrigerant that has flowed into the first back-pressure space S3 from the high-pressure space S2 first flows into the back-pressure chamber 50, flows into the second back-pressure space S3' from the back-pressure chamber 50, and then flows into the low-pressure space S1. In this way, since the back-pressure control valve V1 can prevent the discharge fluid Pd from directly flowing into the low-pressure space S1, a decrease in the operating efficiency of the refrigeration cycle can be prevented.

In addition, since a gap between the first back-pressure space S3 and the second back-pressure space S3' is sealed by the O-ring 69, the discharge fluid Pd can be more reliably prevented from directly flowing into the low-pressure space S1.

In addition, since the effective cross-sectional area A1 and the effective cross-sectional area C1 are larger than the effective cross-sectional area B1, the influence of the control fluid Pb and the suction fluid Ps can be made greater than that of the discharge fluid Pd.

In addition, in the back-pressure control valve V1, the high-pressure space S2 is provided between the first back-pressure space S3 and the second back-pressure space S3', and the low-pressure space S1 is provided on the side opposite to the high-pressure space S2 with the second back-pressure space S3' sandwiched therebetween. In addition, the rod 61 is inserted through the first back-pressure space S3 into the low-pressure space S1.

According to this configuration, since the effective pressure-receiving area on which the pressure of the discharge fluid Pd acts can be reduced by the effective cross-sectional area B1 (A1 - B1), the influence of the control fluid Pb and the suction fluid Ps can be easily made greater than that of the discharge fluid Pd.

In addition, since the first valve body portion 72 is provided at the tip of the rod 61, the pressure of the control fluid Pb can act on the entire effective cross-sectional area A1.

In addition, since the second valve body portion 77 is provided at the tip of the rod 61, the pressure of the suction fluid Ps can act on the entire effective cross-sectional area C1.

In addition, the housing 60 includes the first valve seat 71 and the second valve seat 76. That is, the opening degrees of the first passage 73 and the second passage 78 are adjusted by a so-called poppet mechanism. According to this configuration, since the back-pressure control valve V1 can reliably close the first passage 73 or the second passage 78, the pressure of the control fluid Pb can be more smoothly changed.

In addition, in the back-pressure control valve V1, since the first valve body portion 72 and the second valve body portion 77 are provided at both axial ends of the rod 61, the first valve body portion 72 and the second valve body portion 77 can function as stoppers for each other, so that the maximum opening degree of the first passage 73 or the second passage 78 can be made substantially constant.

In addition, the back-pressure control valve V1 is configured such that the biasing force ($F_{sp}$) of the coil spring 62 acts to press the rod 61 to the left in the axial direction. In other words, the biasing force ($F_{sp}$) of the coil spring 62 acts in the opening direction of the DB valve 70 and in the closing direction of the BS valve 75. That is, in the present embodiment, the DB valve 70 is a normally open valve, and the BS valve 75 is a normally closed valve.

According to this configuration, even when the scroll compressor C is stopped for a long time and the pressures of the suction fluid Ps, the discharge fluid Pd, and the control fluid Pb are balanced and substantially the same, the back-pressure control valve V1 can quickly increase the control fluid Pb since the opening degree of the first passage 73 is appropriately guaranteed and the second passage 78 is closed at a start-up of the scroll compressor C. Therefore, the pressure of the control fluid Pb can be adjusted in a short time at the start-up of the scroll compressor C.

In addition, since the housing 60 is configured such that the second divided body 64 is press-fitted and fixed to the first divided body 63, and the amount of press-fitting is variable within the range of the press-fitting allowance, not only can the biasing force of the coil spring 62 be adjusted, but the axial length of the housing 60 can also be adjusted. Incidentally, the first divided body 63 and the second divided body 64 are fixed to each other by screwing instead of press-fitting.

In addition, since the rod 61 is configured such that the base 67 is press-fitted and fixed to the annular member 68 and the amount of press-fitting is variable within the range of the press-fitting allowance, the stroke amount of the rod 61, in other words, the maximum opening degree of the DB valve 70 or the BS valve 75 can be adjusted. Incidentally, the annular member 68 and the base 67 may be fixed to each other by screwing, bonding, or shrink fitting instead of press-fitting, and the fixing method may be changed as appropriate.

{Second embodiment}

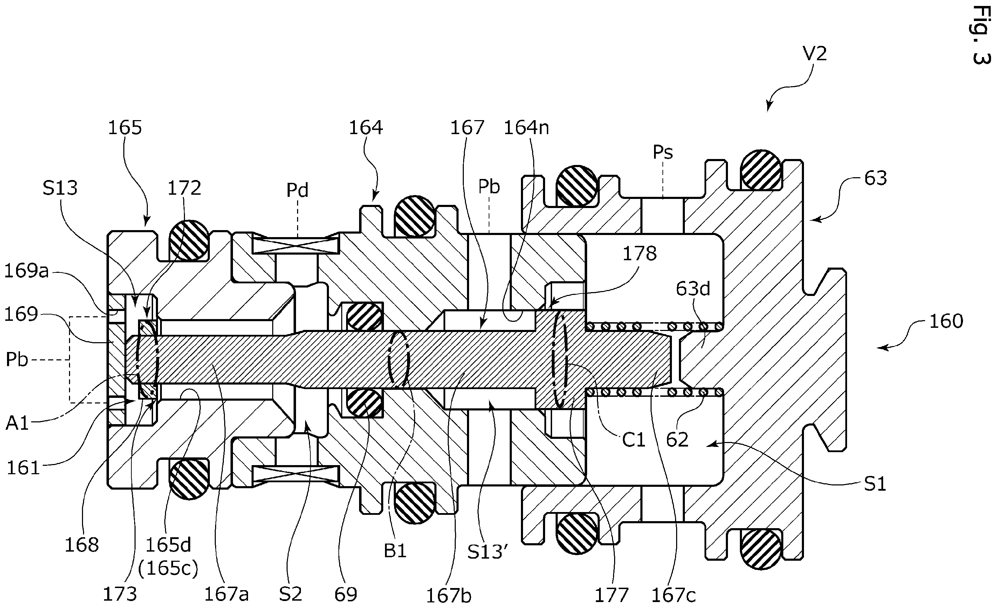

Next, a valve according to the second embodiment will be described with reference to FIG. 3. Incidentally, the description of configurations that are the same as and overlap with the configurations of the above-described embodiment

will be omitted.

As illustrated in FIG. 3, a back-pressure control valve V2 of the second embodiment is mainly composed of a housing 160, a rod 161, and the coil spring 62.

The housing 160 is composed of the first divided body 63, a second divided body 164, a third divided body 165, and a lid member 169.

In the second divided body 164, a constant-diameter portion 164n of an inner peripheral surface that defines a second back-pressure space S13', which extends in the axial direction with a substantially constant diameter, has a diameter that is substantially the same as or slightly larger than the effective cross-sectional area C1 of a second valve body portion 177.

In the third divided body 165, a constant-diameter portion 165d of an inner peripheral surface that defines a first valve hole 165c, which extends in the axial direction with a substantially constant diameter, has a diameter that is substantially the same as or slightly larger than the effective cross-sectional area A1 of a first valve body portion 172.

The lid member 169 is attached to the inner peripheral surface of a left end opening portion of the third divided body 165 by screwing. A space surrounded by the third divided body 165 and the lid member 169 is a first back-pressure space S13. Incidentally, the lid member 169 may be fixed to the third divided body 165 by various fixing means other than screwing; however, it is preferable that the axial position of the lid member 169 can be adjusted.

A communication hole 169a is formed on the outer-diameter side of the lid member 169 so as to penetrate therethrough in the axial direction. The communication hole 169a communicates with the first back-pressure space S13 and the back-pressure chamber 50.

The rod 161 serving as a valve body is composed of a base 167 and an annular member 168.

The base 167 includes a small-diameter body portion 167a serving as a connecting portion; a left large-diameter body portion 167b serving as a connecting portion; the second valve body portion 177, and a right large-diameter body portion 167c in order from the left in the axial direction, and is formed in a stepped columnar shape.

The small-diameter body portion 167a is formed in a columnar shape extending in the axial direction. A left end of the small-diameter body portion 167a is press-fitted and fixed to the annular member 168. A left end of the small-diameter body portion 167a and the annular member 168 constitute the first valve body portion 172.

The left large-diameter body portion 167b is formed in a columnar shape that is increased in diameter and extends from the right end of the small-diameter body portion 167a toward the right in the axial direction and then extends toward the right in the axial direction with a substantially constant diameter. A maximum cross-sectional area of the left large-diameter body portion 167b is the effective cross-sectional area B1.

The second valve body portion 177 is formed in a columnar shape extending from a right end of the left large-diameter body portion 167b toward the right in the axial direction with a substantially constant diameter. A cross-sectional area of the second valve body portion 177 is the effective cross-sectional area C1.

Each of an outer peripheral surface of the second valve body portion 177 and the constant-diameter portion 164n of the second divided body 164 of the housing 160 is a smooth surface having a constant diameter along the axial direction, and both surfaces are slidable relative to each other.

The opening degree of a second passage 178 decreases as the rod 161 moves to the left and the region where the second valve body portion 177 overlaps the constant-diameter portion 164n in the radial direction increases, and the opening degree of the second passage 178 increases as the rod 161 moves to the right and the region where the second valve body portion 177 overlaps the constant-diameter portion 164n in the radial direction decreases. That is, the opening degree of the second passage 178 is adjusted by a so-called spool mechanism.

The right large-diameter body portion 167c is formed in a columnar shape that extends from a right end of the second valve body portion 177 toward the right in the axial direction with a substantially constant diameter and then is reduced in diameter and extends toward the right in the axial direction. A maximum cross-sectional area of the right large-diameter body portion 167c is the effective cross-sectional area B1.

The annular member 168 extends toward the right in the axial direction with a substantially constant diameter. A cross-sectional area of the first valve body portion 172 is the effective cross-sectional area A1 that is substantially the same as the sum of a cross-sectional area of the annular member 168 and a cross-sectional area of the small-diameter body portion 167a.

Each of an outer peripheral surface of the first valve body portion 172 and the constant-diameter portion 165d of the third divided body 165 of the housing 160 is a smooth surface having a constant diameter along the axial direction, and both surfaces are slidable relative to each other.

The opening degree of a first passage 173 decreases as the rod 161 moves to the right and the region where the first valve body portion 172 overlaps the constant-diameter portion 165d in the radial direction increases, and the opening degree of the first passage 173 increases as the rod 161 moves to the left and the region where the first valve body portion 172 overlaps the constant-diameter portion 165d in the radial direction decreases. That is, the opening degree of the first passage 173 is adjusted by a so-called spool mechanism.

The small-diameter body portion 167a of the rod 161 abuts against the lid member 169, thereby restricting the rod

161 from moving to the left in the axial direction. At this time, the opening degree of the first passage 173 is at its maximum, and the opening degree of the second passage 178 is at its minimum and is closed.

In addition, by adjust the axial position of the lid member 169, the maximum opening degree of the first passage 173 can be varied.

In addition, the right large-diameter body portion 167c of the rod 161 abuts against the protrusion 63d of the housing 160, thereby restricting the rod 161 from moving to the right in the axial direction. At this time, the opening degree of the second passage 178 is at its maximum, and the opening degree of the first passage 173 is at its minimum and is closed.

The embodiments of the present invention have been described above with reference to the drawings; however, the specific configurations are not limited to the embodiments, and modifications or additions that are made without departing from the scope of the present invention are also included in the present invention.

For example, in the first and second embodiments, a configuration in which the first valve body portion and the second valve body portion are integrated by being connected via a connecting portion has been described; however, the present invention is not limited thereto, and the first valve body portion and the second valve body portion may be disposed as separate bodies instead of being connected by a connecting member. For example, a configuration in which the first valve body portion and the second valve body portion are pressed against each other by an elastic member that presses the first valve body portion toward the second valve body portion side and biasing means for pressing the second valve body portion toward the first valve body portion side, so that the first valve body portion and the second valve body portion move together may be employed. Further, as long as the first valve body portion and the second valve body portion move in coordination with each other in opposite directions, namely, in the valve opening direction and the valve closing direction, due to the pressure difference, the first valve body portion and the second valve body portion may be disposed as separate bodies without abutting against each other directly and indirectly.

In addition, in the first and second embodiments, the rod has been described as being composed of one base and one annular member; however, the present invention is not limited thereto, and the rod may be composed of one base and two annular members.

In addition, in the first and second embodiments, the first passage or the second passage has been described as being closeable; however, the present invention is not limited thereto, and the first passage and the second passage may be configured not to be closed.

In addition, in the first and second embodiments, each of the first valve body portion and the second valve body portion has been described as functioning as a stopper that restricts movement of the valve body; however, the present invention is not limited thereto, and a stopper that restricts movement of the valve body may be provided separately from the first valve body portion or the second valve body portion.

In addition, in the first and second embodiments, a configuration in which the biasing member is a coil spring has been described; however, the present invention is not limited thereto, and the biasing member may be a coiled wave spring, a leaf spring, or an air spring, or may be changed as appropriate. As one example of an air spring, a pressure-sensitive body such as a bellows in which a gas such as nitrogen is sealed may be disposed.

In addition, in the first and second embodiments, a configuration in which the biasing member functions as a push spring has been described; however, the present invention is not limited thereto, and the biasing member may be a tension spring. If the biasing member is a tension spring, the biasing member may be disposed in the first back-pressure space.

In addition, in the first and second embodiments, the direction in which the biasing member biases the valve body has been described as the opening direction of the DB valve and the closing direction of the BS valve; however, the present invention is not limited thereto, and the direction may be the closing direction of the DB valve and the opening direction of the BS valve. That is, the DB valve is a normally closed valve, and the BS valve is a normally open valve. In the case of such a configuration, the pressure of the back-pressure fluid is easily prevented from increasing excessively.

In addition, in the first and second embodiments, the back-pressure control valve has been described as having a configuration in which the first back-pressure space, the high-pressure space, the second back-pressure space, and the low-pressure space are disposed in order from the left; however, the present invention is not limited thereto, and the back-pressure control valve may have a configuration in which the high-pressure space, the first back-pressure space, the low-pressure space, and the second back-pressure space are disposed in order from the left or a configuration in which the high-pressure space, the back-pressure space, and the low-pressure space are disposed in order from the left, or the configuration may be changed as appropriate.

In addition, in the first and second embodiments, the effective cross-sectional area A1 of the first valve body portion and the effective cross-sectional area C1 of the second valve body portion have been described as being larger than the effective cross-sectional area B1 of the connecting portion; however, the present invention is not limited thereto, and the magnitude relationship may be changed as appropriate. For example, in the case of a configuration in which the high-pressure space, the first back-pressure space, the low-pressure space, and the second back-pressure space are disposed in order from the left, the influence of the back-pressure fluid and the low-pressure fluid can be made greater than that of the high-pressure fluid by setting the effective cross-sectional area A1 of the first valve body portion to be smaller than the effective cross-sectional area B1 of the connecting portion or the effective cross-sectional area C1 of the second

valve body portion.

In addition, in the first and second embodiments, the sealing means has been described as an O-ring; however, the present invention is not limited thereto, and as long as the sealing means can seal the gap between the high-pressure space and the low-pressure space, the sealing means may be a lip packing, a gland packing, a labyrinth seal, or the like, or may be changed as appropriate.

In addition, in the first and second embodiments, the coil spring has been described as abutting against the second valve body portion; however, the present invention is not limited thereto, and a configuration in which a receiving member on which the biasing force of the coil spring acts is provided in the valve body separately from the second valve body portion may be employed. In the case of such a configuration, by adjusting the position of the receiving member, the biasing force of the coil spring can be varied.

In addition, in the first and second embodiments, it has been described that only the back-pressure communication passage in which the valve is disposed is provided; however, the present invention is not limited thereto, and a back-pressure communication passage that allows communication between the high-pressure chamber and the back-pressure chamber may be separately provided. An orifice or a valve may also be provided in the back-pressure communication passage that is separately provided.

In addition, in the first and second embodiments, it has been described that only the pressure relief hole that allows communication between the valve and the low-pressure chamber is provided; however, the present invention is not limited thereto, and a pressure relief hole that allows communication between the back-pressure chamber and the low-pressure chamber may be separately provided. An orifice or a valve may also be provided in the pressure relief hole that is separately provided.

In addition, in the first and second embodiments, the valve applied to scroll compressors used in air conditioning systems for automobiles or the like has been described; however, the present invention is not limited thereto, and the valve may be used to control various working fluids.

In addition, in the first and second embodiments, an example in which the valve is a back-pressure control valve has been described; however, the valve may be, for example, an expansion valve disposed between a condenser and an evaporator in an air conditioning system, a capacity control valve incorporated in a variable capacity compressor in an air conditioning system, or the like.

In addition, each of the suction fluid, the discharge fluid, and the control fluid may be any of a gas, a liquid, and a mixture of gas and liquid.

{REFERENCE SIGNS LIST}

| | |
|---|---|
| 60 | Housing |
| 61 | Rod (valve body) |
| 62 | Coil spring (biasing member) |
| 67a | Shaft portion (connecting portion) |
| 69 | O-ring (sealing means) |
| 70 | DB valve |
| 71 | First valve seat |
| 72 | First valve body portion |
| 73 | First passage |
| 75 | BS valve |
| 76 | Second valve seat |
| 77 | Second valve body portion |
| 78 | Second passage |
| 160 | Housing |
| 161 | Rod (valve body) |
| 167a | Small-diameter body portion (connecting portion) |
| 167b | Left large-diameter body portion (connecting portion) |
| 172 | First valve body portion |
| 173 | First passage |
| 177 | Second valve body portion |
| 178 | Second passage |
| A1 | Effective cross-sectional area |
| B1 | Effective cross-sectional area |
| C1 | Effective cross-sectional area |

| | |
|---|---|
| S1 | Low-pressure space |
| S2 | High-pressure space |
| S3, S13 | First back-pressure space |
| S3', S13' | Second back-pressure space |
| V1, V2 | Back-pressure control valve |

**Claims**

1. A valve, comprising:

   a housing having a high-pressure space into which a high-pressure fluid flows, a back-pressure space into which a back-pressure fluid flows, and a low-pressure space into which a low-pressure fluid flows; and
   a valve body configured to be movable relative to the housing,
   wherein the housing has a first passage configured to provide a communication between the high-pressure space and the back-pressure space, and a second passage configured to provide a communication between the back-pressure space and the low-pressure space,
   the valve body includes a first valve body portion configured to control an opening degree of the first passage, and a second valve body configured to control an opening degree of the second passage, and
   the first valve body portion and the second valve body portion configured to move in coordination with each other such that movement directions of the first valve body portion and the second valve body portion are opposite to each other in an opening direction and a closing direction.

2. The valve according to claim 1,
   wherein the back-pressure space includes a first back-pressure space configured for communicating with the first passage, and a second back-pressure space configured for communicating with the second passage and partitioned from the first back-pressure space.

3. The valve according to claim 1,
   wherein the valve body further includes a connecting portion that connects the first valve body portion and the second valve body portion.

4. The valve according to claim 3,
   wherein a gap between the housing and the connecting portion is sealed.

5. The valve according to claim 3, further comprising:

   a biasing member configured to bias the valve body in one direction,
   wherein a pressure Pd of the high-pressure fluid, a pressure Pb of the back-pressure fluid, a pressure Ps of the low-pressure fluid, an effective cross-sectional area A of the first valve body portion, an effective cross-sectional area B of the connecting portion, an effective cross-sectional area C of the second valve body portion, and a biasing force $F_{sp}$ of the biasing member are configured to satisfy following Equation I.

$$Pb = \frac{A-B}{A-B+C}Pd + \frac{C}{A-B+C}Ps + \frac{Fsp}{A-B+C}$$

--- Equation I

6. The valve according to claim 5,
   wherein the effective cross-sectional area A and the effective cross-sectional area C are larger than the effective cross-sectional area B.

7. The valve according to any one of claims 1 to 6,
   wherein the housing has a first valve seat provided in the first passage, and a second valve seat provided in the second passage.

Fig. 1

41a
42a
6
41c
41b
40
41d
42b
30
8a
7a
13
12
1
11
4
41
42
15
7
8
14
16
43
V1
3
10
20
50
44
3a
2a
42c
2
2b
M
C

Fig. 2

60
63
63b
S1
V1
63c
Ps
63a
64e
64d
63d
62
78(64m)
C1
68
77
76
75
77a
Pb
S3'
64k
67b
B1
64c
64j
64
64b
69
64h
66
Pd
S2
64f
65b
64g
67a
64a
65a
67
65
72a
S3
71
72
70
Pb
61
A1
73(65c)

Fig. 3

160
63
S1
V2
63d
62
167c
Ps
178
C1
177
164n
Pb
S13'
167
167b
B1
164
69
Pd
S2
167a
172
165d
(165c)
165
173
S13
168
169a
169
Pb
A1
161

**INTERNATIONAL SEARCH REPORT**

International application No. **PCT/JP2024/037616**

**A. CLASSIFICATION OF SUBJECT MATTER**

***F16K 11/048***(2006.01)i; ***F04C 18/02***(2006.01)i
FI: F16K11/048 Z; F04C18/02 311X

According to International Patent Classification (IPC) or to both national classification and IPC

**B. FIELDS SEARCHED**

Minimum documentation searched (classification system followed by classification symbols)

F16K11/048; F04C18/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | EP 1375918 A1 (DELPHI TECHNOLOGIES, INC.) 02 January 2004 (2004-01-02) paragraphs [0027]-[0046], fig. 1-3 | 1-7 |
| A | JP 2018-21520 A (SANDEN HOLDINGS CORP.) 08 February 2018 (2018-02-08) paragraphs [0044]-[0060], fig. 8-12 | 1-7 |
| A | WO 2017/002784 A1 (VALEO JAPAN CO., LTD.) 05 January 2017 (2017-01-05) paragraphs [0047]-[0054], fig. 4 | 1-7 |

☐ Further documents are listed in the continuation of Box C.

☑ See patent family annex.

* Special categories of cited documents:
“A” document defining the general state of the art which is not considered to be of particular relevance
“D” document cited by the applicant in the international application
“E” earlier application or patent but published on or after the international filing date
“L” document which may throw doubts on priority claim(s) or which is cited to establish the publication date of another citation or other special reason (as specified)
“O” document referring to an oral disclosure, use, exhibition or other means
“P” document published prior to the international filing date but later than the priority date claimed
“T” later document published after the international filing date or priority date and not in conflict with the application but cited to understand the principle or theory underlying the invention
“X” document of particular relevance; the claimed invention cannot be considered novel or cannot be considered to involve an inventive step when the document is taken alone
“Y” document of particular relevance; the claimed invention cannot be considered to involve an inventive step when the document is combined with one or more other such documents, such combination being obvious to a person skilled in the art
“&” document member of the same patent family

| Date of the actual completion of the international search | Date of mailing of the international search report |
|---|---|
| **11 December 2024** | **24 December 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/037616**

| Patent document cited in search report | Publication date (day/month/year) | Patent family member(s) | Publication date (day/month/year) |
|---|---|---|---|
| EP 1375918 A1 | 02 January 2004 | (Family: none) | |
| JP 2018-21520 A | 08 February 2018 | US 2019/0211828 A1<br>paragraphs [0077]-[0095], fig. 8-12<br>WO 2018/025569 A1<br>CN 109563834 A | |
| WO 2017/002784 A1 | 05 January 2017 | US 2018/0187665 A1<br>paragraphs [0058]-[0066], fig. 4<br>EP 3318756 A1<br>CN 107709772 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010150967 A